# EUROPÄISCHE PATENTSCHRIFT

(11) **EP 0 888 657 B1**
(45) Veröffentlichungstag und Bekanntmachung des Hinweises auf die Patenterteilung: **15.12.1999**
(21) Anmeldenummer: 97920546.5
(22) Anmeldetag: 18.03.1997
(51) Int. Cl.: H02G 5/06

(54) **GASISOLIERTE ENERGIEÜBERTRAGUNGSANLAGE MIT IN ABSTÄNDEN AXIAL FIXIERTEM INNENLEITER**
GAS-INSULATED POWER TRANSMISSION SYSTEM WITH INTERNAL CONDUCTORS FIXED AXIALLY AT INTERVALS
INSTALLATION DE TRANSMISSION D'ENERGIE A ISOLEMENT GAZEUX A CONDUCTEURS INTERNES FIXES AXIALEMENT A DISTANCE

(30) Priorität: 19.03.1996 DE 19613026; 12.04.1996 DE 19616179; 16.08.1996 DE 29614717 U
(43) Veröffentlichungstag der Anmeldung: 07.01.1999
(73) Patentinhaber: SIEMENS AKTIENGESELLSCHAFT, 80333 München (DE)
(72) Erfinder: KELCH, Thomas, D-13465 Berlin (DE); KIEPER, Mario, D-14612 Falkensee (DE); BRÄUNLICH, Christoph, D-12529 Schönefeld (DE)
(86) Internationale Anmeldenummer: DE9700615
(87) Internationale Veröffentlichungsnummer: WO9735371

(56) Entgegenhaltungen:
- EP-A- 0 597 147
- EP-A- 0 660 479
- DE-U- 7 323 367
- FR-A- 2 716 521
- GB-A- 2 044 513
- US-A- 3 372 226
- US-A- 4 053 700

## Beschreibung

Die Erfindung liegt auf dem Gebiet der Energieverteilung und ist bei der konstruktiven Ausgestaltung einer gasisolierten Energieübertragungsanlage anzuwenden, bei der ein aus mehreren steckbar miteinander verbundenen Abschnitten aufgebauter rohrförmiger Innenleiter mittels isolierender Abstandhalter in einem rohrförmigen Außenleiter angeordnet ist und bei der das eine Ende des jeweiligen Innenleiterabschnittes mittels eines scheibenförmigen, am Außenleiter axial fixierten Stützisolators ebenfalls axial fixiert ist. Die Erfindung befaßt sich dabei mit der konstruktiven Ausgestaltung des Fixierbereiches.

Zur axialen und radialen Fixierung eines rohrförmigen Innenleiterabschnittes im Bereich einer Innenleitersteckverbindungsstelle ist es bekannt, daß diesbezügliche Ende des Innenleiterabschnittes mit einem rohrartigen Endteil zu versehen, das einerseits mit dem übrigen Innenleiterabschnitt fest verbunden ist und das andererseits aus Montagegründen und zum Ausgleich temperaturbedingter Längenänderungen als Steckkontakt für eine am Ende des anderen Innenleiterabschnittes angeordnete Steckbuchse dient; dieses Endteil ist im Bereich einer zentrischen Durchführungsbohrung eines scheibenförmigen, konischen Stützisolators von diesem formschlüssig umfaßt, wozu der kleinste Innendurchmesser der Durchführungsbohrung kleiner als der Außendurchmesser des Innenleiterabschnittes gewählt und das rohrförmige Endteil in diesem Bereich mit einer Profilierung versehen ist. Im übrigen ist der Stützisolator mit seinem Außenrand im Bereich der Stoßstelle der beiden zugehörigen Außenleiterabschnitte axial fixiert; weiterhin ist die Innenleiter-Steckverbindung annähernd durchmessergleich zum Innenleiter ausgebildet und von einer rohrartigen Abschirmelektrode umgeben (DE 26 25 255 A / US 4,053,700). - Bei einer anderen, von der Funktion her ähnlich aufgebauten Innenleitersteckverbindungsstelle ist das rohrartige Endteil zweiteilig ausgebildet. Jedes der beiden Teile bildet u.a. eine den Innenleiter radial überragende Steuerelektrode; mittels dieser Steuerelektroden sind die beiden Teile gegen zwei kurze Ringflansche im Bereich der Durchführungsöffnung des zugehörigen Stützisolators verspannt und dabei zugleich durch die Durchführungsöffnung hindurch kraftschlüssig miteinander verbunden. Das eine, kopfartig ausgebildete Teil ist dabei direkt mit dem rohrförmigen Teil des Innenleiterabschnittes verbunden, während das andere , mit einem Befestigungsflansch versehene Teil in eine Stechbuchse übergeht, die einen hohlzylindrischen Gleitkontakt aufweist, der seinerseits das als zylindrischer Stechkontakt ausgebildete Ende des angrenzenden Innenleiterabschnittes umfaßt (EP 0 660 479 A1).

Bei einer anderen bekannten Energieübertragungsanlage (DE-U 73 23 367) ist die als Steckverbindung ausgebildete Übergangsstelle zwischen zwei Innenleiterabschnitten im Durchmesser erheblich kleiner ausgelegt als der Außendurchmesser der Innenleiter und ist von einer Abschirmhülse umgeben, die an dem einen Innenleiterabschnitt axial verschiebbar anliegt. Zur Steckverbindung der Innenleiterabschnitte ist das jeweilige Ende des rohrförmigen Innenleiters mit einem als Übergangsstück bezeichneten Endteil versehen, von denen das eine eine kugelförmig gelagerte, hohlzylindrische Steckbuchse umfaßt und das andere mit einem rohrförmigen Steckkontakt versehen ist, auf dessen Mantelfläche die Steckbuchse axial verschiebbar aufsitzt.

Es ist weiterhin bekannt, die axiale Fixierung des Innenleiters im Bereich einer starren Leiterverbindungsstelle dadurch zu erreichen, daß man die beiden Enden der Innenleiterabschnitte mit kopfartigen Endteilen versieht, die durch die Durchführungsbohrung des scheibenförmigen Stützisolators hindurch kraftschlüssig miteinander verbunden und in dieser Durchführungsbohrung axial und radial formschlüssig fixiert sind. Hierzu ist das eine kopfartige Endteil mit einer Abstufung versehen, die zusammen mit dem anderen kopfartigen Endteil eine Art Einschnürung bildet, in die der Stützisolator eingreift. Im Bereich dieser Einschnürung sind die Kopfteile leicht gerundet, um zu starke Erhöhungen der elektrischen Feldstärke zu vermeiden (US 3,372,226, CH 453 460 / US 3, 331,911).

Ausgehend von einer Energieübertragungsanlage mit den Merkmalen des Oberbegriffes des Patentanspruches 1 liegt der Erfindung die Aufgabe zugrunde, die der Fixierung eines Innenleiterabschnittes dienende Konstruktion zu vereinfachen und damit montagefreundlich auszugestalten und zugleich an höchste Übertragungsspannungen von ca. 400 kV und mehr anzupassen.

Zur Lösung dieser Aufgabe ist gemäß der Erfindung vorgesehen, daß der Stützisolator im Bereich der Durchführungsbohrung beidseits mit je einem kurzen Ringflansch versehen ist, daß das Endteil des Innenleiterabschnittes aus zwei kopfartigen Teilen besteht, die durch zentrische Durchführungsbohrung hindurch kraftschlüssig miteinander verbunden sind sowie die Durchführungsbohrung des Isolators und die Ringflansche radial überragen und an den Ringflanschen anliegen, und daß weiterhin die kopfartigen Teile in dem die Ringflansche überragenden Bereich als Steuerelektroden mit einem im Querschnitt nasenartigen, den jeweiligen Ringflansch hintergreifenden Vorsprung ausgebildet sind, wobei das eine kopfartige Teil direkt mit dem rohrförmigen Teil des Innenleiterabschnittes fest verbunden ist und das andere kopfartige Teil in einen den zylindrischen Steckkontakt bildenden rohrförmigen Ansatz übergeht.

Bei einer derartigen Ausgestaltung des Endteiles und des Stützisolators sind die Funktionen der axialen und radialen Fixierung eines Innenleiterabschnittes und der aufgrund von Temperatureinflüssen erforderlichen Kompensation von Längenänderungen des Innenleiterabschnittes konstruktiv derart zusammengefaßt, daß einerseits eine montagefreundliche und mechanisch sichere Fixierung des Innenleiterabschnittes und andererseits in den konstruktionsbedingt kritischen Feldstärkebereichen die erforderliche Spannungsfestigkeit gewährleistet sind.

Um die elektrischen Feldverhältnisse des Innenleiterfestpunktes und der Innenleitersteckverbindung nicht ungünstiger als im übrigen Bereich eines Innenleiterabschnittes zu gestalten, sollten die kopfförmigen Endteile mit ihrem maximalen Außendurchmesser den Außendurchmesser des Innenleiters nicht überschreiten. Daher empfiehlt es sich, den Außendurchmesser des an dem einen kopfförmigen Teil vorgesehenen rohrförmigen Ansatzes kleiner als den Außendurchmesser des als Steuerelektrode ausgebildeten Bereiches des kopfförmigen Teiles zu wählen. Dies ermöglicht, für den als Steuerelektrode ausgebildeten Bereich eine Formgebung zu wählen, die auch einen günstigen Feldstärkeverlauf bei aufgeschobener Steckbuchse des angrenzenden Innenleiterabschnittes gewährleistet.

Aus mechanischen und elektrischen Gründen hat es sich als zweckmäßig erwiesen, scheibenförmige Stützisolatoren gasisolierter Rohrleiteranlagen konisch oder schüsselartig auszubilden. Den dadurch bedingten Veränderungen des elektrischen Feldverlaufes im Bereich eines Stützisolators wird im vorliegenden Fall zweckmäßig dadurch Rechnung getragen, daß der Außendurchmesser des vom Stützisolator umgebenen kopfförmigen Teiles kleiner als der Außendurchmesser des sich anschließenden Innenleiterabschnittes gewählt wird.

Die hochspannungsfeste Ausgestaltung des an dem einen kopfförmigen Teil vorgesehenen Steckverbinders erfolgt zweckmäßig in der Weise, daß der angrenzende Innenleiterabschnitt mit einer durchmessergleichen Steuerelektrode versehen ist, die zugleich den hohlzylindrischen Gleitkontakt bildet. Um hierbei zugleich kleinen Winkelabweichungen Rechnung zu tragen, die sich bezüglich der Längsachse der Rohrleiteranlage im Bereich einer Leiteraverbindungsstelle ergeben können, sollte der Gleitkontakt aus einem von der Steuerelektrode getrennt angeordneten Kontaktstück bestehen, das an seinem äußeren Umfang in bekannter Weise als kugelförmiges Kontaktstück ausgebildet und in der Steuerelektrode gelagert ist.

Drei Ausführungsbeispiele eines gemäß der Erfindung ausgestalteten Festpunktes für einen Innenleiterabschnitt einer gasisolierten Energieübertragungsanlage sind in den Figuren 1 bis 4 dargestellt. Dabei zeigt
- Figur 1: die prinzipielle Anordnung eines solchen Festpunktes im Zuge einer Energieübertragungsanlage mit axialer Fixierung des Stützisolators unter Verwendung von Ringelektroden,
- Figur 2: einen Leiterfestpunkt mit konischem, sich zum Innenleiter hin öffnenden Stützisolator,
- Figur 3: einen Leiterfestpunkt mit konischem, sich zum Steckverbinder hin öffnenden Stützisolator und
- Figur 4: einen Leiterfestpunkt mit axialer Fixierung des Stützisolators im Bereich einer Außenleiter-Flanschverbindung.

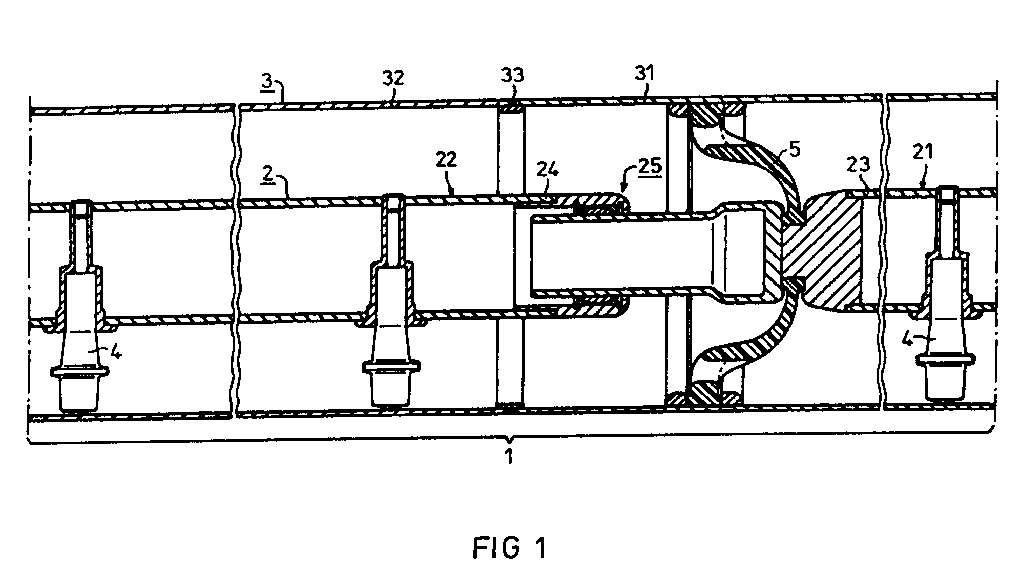

Figur 1 zeigt einen Längsabschnitt 1 einer gasisolierten Energieübertragungsanlage, die im wesentlichen aus einem Innenleiter 2, einem Außenleiter 3 und isolierenden Abstandhaltern 4 besteht, mit denen der Innenleiter 2 zentrisch im Außenleiter 3 gehalten ist. Zwei Außenleiterabschnitte 31 und 32 sind im Bereich einer Stoßstelle durch eine Schweißverbindung 33 miteinander verbunden. Benachbart zu dieser Verbindungsstelle ist ein scheibenförmiger Stützisolator 5 positioniert, mit dessen Hilfe ein Innenleiterabschnitt 21 axial fixiert ist und in dessen Bereich der angrenzende Innenleiterabschnitt 22 steckbar mit dem Innenleiterabschnitt 21 verbunden ist. Hierzu sind die Innenleiterabschnitte 21 und 22 an ihren Enden 23 und 24 speziell gestaltet. - Isolierende Abstandhalter 4, mit denen der Innenleiter 2 jeweils zwischen zwei axial fixierten scheibenförmigen Stützisolatoren 5 gehalten wird, sind beispielsweise in der DE-A 44 44 554 beschrieben.

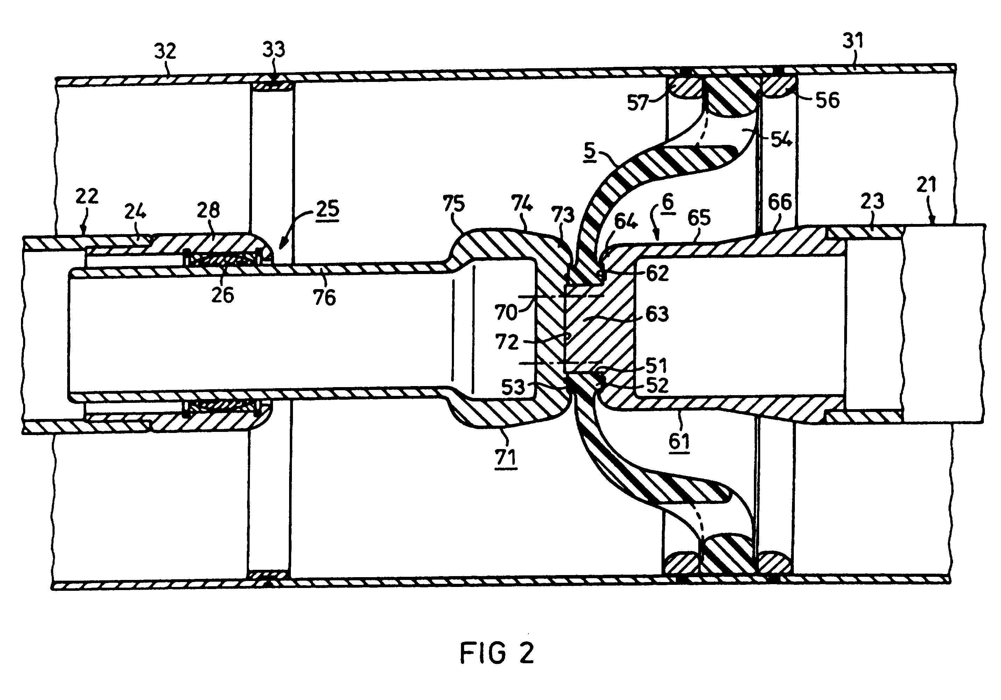

Gemäß Figur 2 ist der scheibenförmige Stützisolator 5 im Außenleiterabschnitt 31 mit Hilfe von zwei Ringelektroden 56 und 57 in bekannter Weise axial fixiert. Die Ringelektroden 56 und 57 sind dabei mit Hilfe von gasdichten Lochschweißungen mit dem Außenleiterabschnitt 31 verbunden. - Bei dem scheibenförmigen Stützisolator 5 handelt es sich um einen Isolator mit axialen Durchlaßöffnungen 54, der also gasdurchlässig ausgebildet ist. Ohne derartige Öffnungen kann er auch als Schottisolator dienen, wenn er im Bereich der Fixierung am Außenleiterabschnitt 31 entsprechend abgedichtet ist, beispielsweise zwischen zwei Verbindungsflansche eingeklemmt ist.

Um den Innenleiterabschnittes 21 am Stützisolator 5 axial fixieren zu können, ist zum einen der schüsselförmig ausgebildete Stützisolator im Bodenbereich mit einer Durchführungsöffnung 51 versehen, deren Durchmesser kleiner als der Außendurchmesser des Innenleiterabschnittes 21 ist. Zum anderen ist der Innenleiterabschnitt 21 an seinem Ende 23 mit einem Endteil 6 versehen, in das der scheibenförmige Isolator mit seiner Durchführungsöffnung 51 formschlüssig eingreift. Hierzu besteht das Endteil 6 aus einem ersten kopfförmigen Teil 61 und einem zweiten kopfförmigen Teil 71, die durch die Durchführungsöffnung 51 des Isolators 5 hindurch mittels Schrauben 70 kraftschlüssig miteinander verbunden sind. Um einen guten elektrischen Übergang zu schaffen, ist das Kopfteil 61 im Bereich seiner Deckfläche mit einem kurzen zylindrischen Ansatz 63 versehen, der durch die Durchführungsbohrung 51 hindurchgreift und damit zugleich das Endteil 6 radial im Stützisolator 5 fixiert. Der zylindrische Ansatz 63 berührt axial die Deckfläche des kopfförmigen Teiles 71 im Bereich einer flachen Ausnehmung 72, wodurch der erforderliche elektrische Kontakt zwischen den Kopfteilen 61 und 71 gewährleistet ist.

Die Deckfläche 62 des kopfförmigen Teiles 61 und die entsprechende Deckfläche des kopfförmigen Teiles 71 liegen im übrigen axial am Stützisolator an, und zwar im Bereich zweier ringförmiger Flansche 52 und 53. Im Bereich dieser Flansche sind nicht näher bezeichnete Dichtringe angeordnet. Durch die Flansche 52 und 53 wird zudem ein Raum geschaffen, der die Ausgestaltung der beiden kopfförmigen Teile 61 und 71 am Rand ihrer Deckfläche als Steuerelektroden 64 bzw. 73 ermöglicht. Neben einer Abrundung in diesem Randbereich ist dabei ein im Querschnitt nasenartiger Vorsprung vorgesehen, mit dem die Steuerelektroden 64 und 73 die beiden Flansche 52 und 53 hintergreifen. Die kopfförmigen Teile 61 und 71 sind dabei so dimensioniert, daß sie die Flansche 52 und 53 radial überragen.

Das kopfförmige Teil 61 wird von dem konischen bzw. schüsselförmigen Bereich des Isolators 5 umfaßt. In diesem Bereich weist das kopfförmige Teil 61 im Anschluß an die Steuerelektrode 64 einen zylindrischen Bereich 65 auf, dessen Außendurchmesser kleiner als der Außendurchmesser des Innenleiterabschnittes 21 gewählt ist. An den zylindrischen Bereich 65 schließt sich zum Übergang auf den Innenleiterabschnitt 21 ein konischer Bereich 66 an, an dessen Ende das kopfförmige Endteil dann mit dem Ende 23 des Innenleiterabschnittes 21 stoff- oder kraftschlüssig verbunden ist.

Das kopfförmige Teil 71 ist im Anschluß an die Steuerelektrode 73 mit einem leicht konischen Abschnitt 74 und im Anschluß daran mit einem gerundeten Bereich 75 versehen, der in ein rohrförmiges Teil 76 übergeht. Während das kopfförmige Teil 71 in dem als Steuerelektrode ausgebildeten Bereich einen maximalen Außendurchmesser aufweist, der dem Außendurchmesser des Innenleiterabschnittes 22 entspricht, ist der Außendurchmesser des rohrförmigen Ansatzes 76 kleiner ausgebildet, um als zylindrischer Steckkontakt der Steckverbindung 25 dienen zu können. Als Steckbuchse zur Verbindung des Endes 24 des Innenleiterabschnittes 22 mit dem zylindrischen Steckkontakt 76 dient ein als Steuerelektrode ausgebildetes zylindrisches Kontaktteil 28, das durchmessergleich zum Innenleiterabschnitt 22 mit dem Innenleiter fest verbunden ist und ein hohlzylindrisches Kontaktstück 26 umfaßt. Das Kontaktstück 26 ist auf seiner Innenfläche mit zwei nicht näher bezeichneten Kontaktlamellen versehen. Am Außenumfang ist es kugelförmig gestaltet und über ebenfalls nicht näher bezeichnete Führungselemente drehbar in dem Kontaktteil 28 gelagert. Das Kontaktteil 28 enthält eine weitere, nicht näher bezeichnete ringförmige Kontaktlamelle, wodurch der sichere elektrische Übergang von dem Kontaktteil 28 auf das Kontaktstück 26 und damit auf den rohrförmigen Ansatz 76 gewährleistet ist. - Derartige Ausgestaltungen von Kontaktstücken sind an sich bekannt (siehe beispielsweise Prospekt Ho Nr. 15 der Fa. Multi-Kontakt AG (CH) und ältere deutsche Patentanmeldung 196 16 179.7).

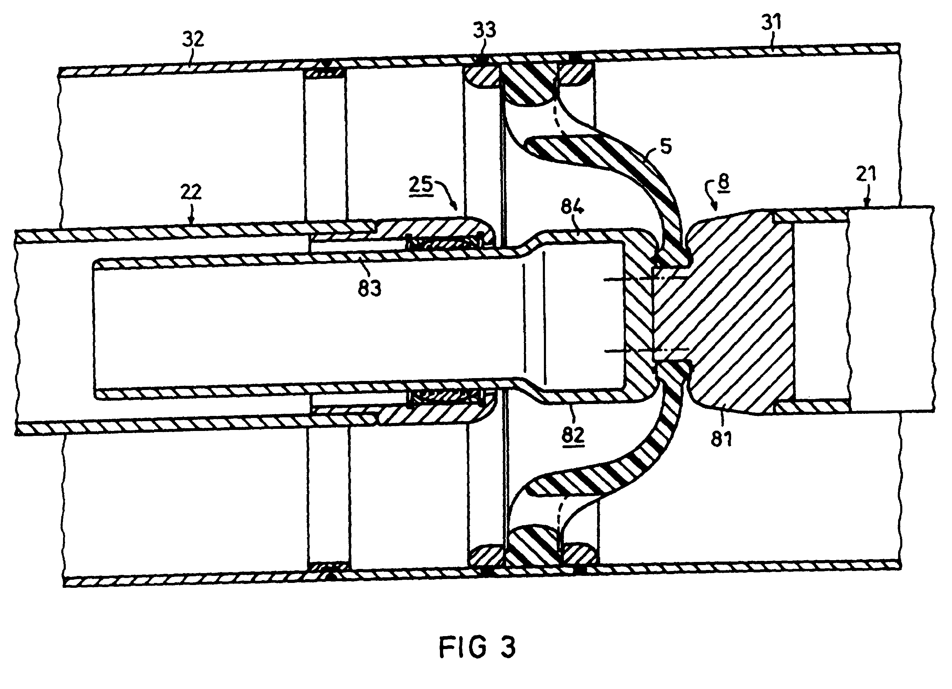

Gemäß Figur 3 ragt der scheibenförmige Stützisolator 5 mit seinem konischen Bereich in den Außenleiterabschnitt 31 hinein. Dadurch ist es möglich, den Stützisolator 5 näher an der Verbindungsstelle 33 der beiden Außenleiterabschnitte 31 und 32 anzuordnen. Dies erfordert aber eine etwas andere Ausgestaltung des Endteiles 8 des Innenleiterabschnittes 21 als bei dem Ausführungsbeispiel gemäß Figur 2. Das Endteil 8 besteht auch hier aus zwei Teilen, nämlich dem kopfförmigen Teil 81 und dem kopfförmigen Teil 82, wobei das kopfförmige Teil 81 im Prinzip wie das kopfförmige Teil 61 gemäß Figur 2 ausgebildet ist, lediglich mit dem Unterschied, daß das Teil insgesamt kürzer ist, weil ein sich an die eigentliche Steuerelektrode anschließender zylindrischer Bereich nicht erforderlich ist. Andererseits ist das kopfförmige Teil 82 im maximalen Außendurchmesser kleiner als der Außendurchmesser des angrenzenden Innenleiterabschnittes 22 ausgebildet. Im Prinzip sind auch hier zwei als Steuerelektrode fungierende abgerundete Bereiche vorgesehen, dazwischen aber kein konischer, sondern nur ein zylindrischer Bereich 84. - Der Steckverbinder 25 ist in gleicher Weise wie der Steckverbinder gemäß Figur 2 ausgebildet. Er ist lediglich in einer Position dargestellt, die die maximale axial mögliche Ausdehnung des Innenleiterabschnittes 22 auf dem rohrförmigen Steckteil 83 berücksichtigt.

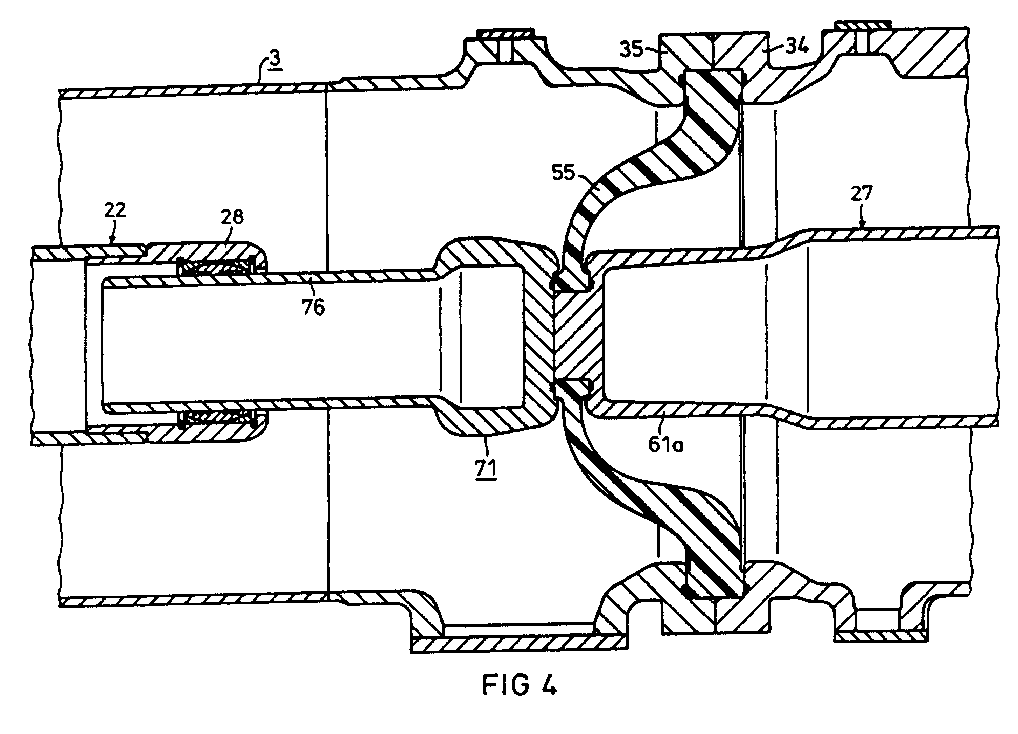

Figur 4 zeigt einen Innenleiter-Festpunkt im Bereich eines gasundurchlässig ausgebildeten Stützisolators 55, eines sogenannten Schottisolators. Dieser Schottisolator ist mit seinem äußeren Rand zwischen zwei Verbindungsflansche 34 und 35 eingeklemmt, die an zwei gehäuseartigen Kapselungsteilen des Außenleiters 3 angeordnet sind. Bei diesem Ausführungsbeispiel ist weiterhin das kopfförmige Endteil 61a des Innenleiters 27 einstückig mit dem Innenleiterabschnitt 27 ausgebildet. Dies kommt insbesondere dann in Betracht, wenn es sich bei dem Innenleiterabschnitt 27 um ein relativ kurzes Innenleiterstück handelt,das anschließend mit einem anderen Innenleiterstück fest oder lösbar verbunden ist. - Das zweite kopfförmige Teil 71 entspricht dem kopfförmigen Teil 71 gemäß Figur 2. Für die Steckverbindung zwischen dem Innenleiterabschnitt 22 und dem rohrförmigen Ansatz 76 ist hierbei vorgesehen, daß die Steuerelektrode 25 zugleich das eigentliche Kontaktstück bildet und über einen Lamellenkontakt am Steckkontakt 76 anliegt.

## Patentansprüche

1. Gasisolierte Energieübertragungsanlage mit einem rohrförmigen Innenleiter und einem konzentrisch zum Innenleiter angeordneten rohrförmigen Außenleiter,
bei der der Innenleiter und der Außenleiter (31) aus mehreren miteinander verbundenen Abschnitten bestehen und der Innenleiter mittels isolierender Abstandhalter im Außenleiter abgestützt ist und die Innenleiterabschnitte (21) steckbar miteinander verbunden sind, wobei zur axialen Fixierung des einen Endes eines Innenleiterabschnittes im Außenleiter ein scheibenförmiger Isolator (5) angeordnet ist, der am Außenleiter axial fixiert ist und den Innenleiter im Bereich einer zentrischen Durchführungsbohrung (51), deren Durchmesser kleiner als der Außendurchmesser des Innenleiters ist, formschlüssig umfaßt, und wobei der Innenleiterabschnitt (21) im Bereich des Stützisolators (5) aus einem Endteil (6) besteht, das einerseits mit dem übrigen Innenleiterabschnitt fest verbunden ist und andererseits als zylindrischer Steckkontakt eines Steckverbinders ausgebildet ist, dessen Steckbuchse vom Ende des angrenzenden Innenleiterabschnittes und einem an diesem Ende fixierten, hohlzylindrischen Gleitkontakt (26) gebildet wird,
**dadurch gekennzeichnet,**
daß der Stützisolator (5) im Bereich der Durchführungsbohrung (51) beidseits mit je einem kurzen Ringflansch (52,53) versehen ist,
daß das Endteil (6) des Innenleiterabschnittes (21) aus zwei kopfartigen Teilen (61,71) besteht, die
- durch die zentrische Durchführungsbohrung (51) hindurch kraftschlüssig miteinander verbunden sind,
- die Durchführungsbohrung (51) des Isolators (5) und die Ringflansche (52,53) radial überragen
- und an den Ringflanschen (52,53) anliegen,
und daß die kopfartigen Teile (61,71) in dem die Ringflansche (52,53) überragenden Bereich als Steuerelektroden (64; 73,75) mit einem im Querschnitt nasenartigen, den jeweiligen Ringflansch (52,53) hintergreifenden Vorsprung (64,73) ausgebildet sind,
wobei das eine kopfartige Teil (61) direkt mit dem rohrförmigen Teil (23) des Innenleiterabschnittes (21) fest verbunden ist und das andere kopfartige Teil (71) in einen den zylindrischen Steckkontakt bildenden rohrförmigen Ansatz (76) übergeht.

2. Gasisolierte Energieübertragungsanlage nach Anspruch 1,
**dadurch gekennzeichnet,**
daß der Außendurchmesser des rohrförmigen Ansatzes (76) des einen kopfförmigen Teiles (71) kleiner als der Außendurchmesser des als Steuerelektrode (73,75) ausgebildeten Bereiches des kopfförmigen Teiles (71) ist.

3. Gasisolierte Energieübertragungsanlage nach Anspruch 1 oder 2,
**dadurch gekennzeichnet,**
daß der scheibenförmige Stützisolator (5) konisch ausgebildet ist, wobei der Außendurchmessr des vom Stützisolator umgebenen kopfförmigen Teiles (61) kleiner als der Außendurchmesser des sich anschließenden Innenleiterabschnittes (21) ist.

4. Gasisolierte Energieübertragungsanlage nach einem der Ansprüche 1 bis 3,
**dadurch gekennzeichnet,**
daß das Ende (24) des angrenzenden Innenleiterabschnittes (22) mit einer durchmessergleichen Steuerelektrode (25) versehen ist, die zugleich den hohlzylindrischen Gleitkontakt (26) bildet.

5. Gasisolierte Energieübertragungsanlage nach Anspruch 4,
**dadurch gekennzeichnet,**
daß der Gleitkontakt aus einem von der Steuerelelektrode (25) getrennten Kontaktstück (26) besteht, das an seinem äußeren Umfang als kugelförmiges Kontaktstück ausgebildet und an der Steuerelektrode (25) drehbar gelagert ist.

## Claims

1. Gas-insulated power transmission system having a tubular inner conductor and a tubular outer conductor arranged concentrically with respect to the inner conductor, in which the inner conductor and the outer conductor (31) comprise a plurality of sections connected to each other and the inner conductor is supported in the outer conductor by means of insulating spacers and the inner-conductor sections (21) are connected to each other in a plug-in-type manner, with there being arranged for the axial fixing of the one end of an inner-conductor section in the outer-conductor section a disc-shaped insulator (5) which is axially fixed on the outer conductor and surrounds the inner conductor in a form-locking manner in the region of a centric lead-through bore (51), the diameter of which is smaller than the outside diameter of the inner conductor, and with the inner-conductor section (21), in the region of the post insulator (5), comprising an end portion (6), which, on the one hand, is securely connected to the rest of the inner-conductor section and, on the other hand, is constructed as a cylindrical plug-in contact of a plug-in connector, the socket-contact of which is formed by the end of the contiguous inner-conductor section and a hollow-cylindrical sliding contact (26) fixed on this end, characterised
in that in the region of the lead-through bore (51), the post insulator (5) is provided on both sides with a respective short ring flange (52, 53),
in that the end portion (6) of the inner-conductor section (21) comprises two head-shaped portions (61, 71) which
- are connected to each other in a force-locking through the centric lead-through bore (51),
- project radially above the lead-through bore (51) of the insulator (5) and the ring flanges (52, 53),
- and rest on the ring flanges (52, 53)
and in that in the region which projects above the ring flanges (52, 53), the head-shaped portions (61, 71) are constructed as control electrodes (64; 73, 75) having a projection (64, 73) which is lug-shaped in cross-section and grips behind the respective ring flange (52, 53),
with the one head-shaped portion (61) being securely connected directly to the tubular portion (23) of the inner-conductor section (21) and the other head-shaped portion (71) turning into a tubular extension (76) which forms the cylindrical plug-in contact.

2. Gas-insulated power transmission system according to claim 1, characterised in that the outside diameter of the tubular extension (76) of the one head-shaped portion (71) is smaller than the outside diameter of the region of the head-shaped portion (71) that is constructed as a control electrode (73, 75).

3. Gas-insulated power transmission system according to claim 1 or 2, characterised in that the disc-shaped post insulator (5) is conical in construction, with the outside diameter of the head-shaped portion (61) surrounded by the post insulator being smaller than the outside diameter of the contiguous inner-conductor section (21).

4. Gas-insulated power transmission system according to one of claims 1 to 3, characterised in that the end (24) of the contiguous inner-conductor section (22) is provided with a control electrode (25) of equal diameter, which at the same time forms the hollow-cylindrical sliding contact (26).

5. Gas-insulated power transmission system according to claim 4, characterised in that the sliding contact comprises a contact piece (26) which is separate from the control electrode (25) and is constructed as a spherical contact piece at its outer periphery and is rotatably mounted on the control electrode (25).

## Revendications

1. Installation de transmission d'énergie à isolement gazeux, comprenant un conducteur interne tubulaire et un conducteur externe tubulaire agencé concentriquement audit conducteur interne,
dans laquelle le conducteur interne et le conducteur externe (3) sont constitués de plusieurs segments reliés les uns aux autres, le conducteur interne est en appui dans le conducteur externe au moyen de pièces isolantes d'espacement, et les segments conducteurs intérieurs (21) sont reliés les uns aux autres avec faculté d'enfichage, un isolateur discoïdal (5) étant logé dans le conducteur externe en vue de la consignation axiale à demeure de l'une des extrémités d'un segment conducteur intérieur, lequel isolateur est bloqué axialement sur le conducteur externe et entoure le conducteur interne, par concordance de formes, dans la région d'un orifice central de traversée (51) dont le diamètre est plus petit que le diamètre extérieur dudit conducteur interne,
et le segment conducteur intérieur (21) étant constitué, dans la région de l'isolateur d'appui (5), d'une pièce d'extrémité (6) qui, d'une part, est reliée rigidement au reste du segment conducteur intérieur et qui, d'autre part, est réalisée sous la forme d'un contact enfichable cylindrique d'un connecteur enfichable dont la douille d'enfichage est formée par l'extrémité du segment conducteur intérieur attenant et par un contact glissant (26) cylindrique creux, bloqué sur cette extrémité,
caractérisée par le fait
que l'isolateur d'appui (5) est pourvu de part et d'autre, dans la région de l'orifice de traversée (51), d'un court collet annulaire respectif (52, 53) ;
que la pièce d'extrémité (6) du segment conducteur intérieur (21) se compose de deux parties (61, 71) formant têtes qui
- sont reliées mécaniquement l'une à l'autre en franchissant l'orifice central de traversée (51),
- font saillie radialement au-delà des collets annulaires (52, 53) et de l'orifice de traversée (51) de l'isolateur (5)
- et sont appliquées contre les collets annulaires (52, 53) ;
et que les parties (61, 71) formant têtes sont réalisées, dans la région faisant saillie au-delà des collets annulaires (52, 53), sous la forme d'électrodes de commande (64 ; 73, 75) pourvues d'une protubérance (64, 73) de section transversale du type mentonnet, venant en prise derrière le collet annulaire (52, 53) considéré,
l'une (61) des parties formant têtes étant en liaison rigide directe avec la partie tubulaire (23) du segment conducteur intérieur (21), et l'autre partie (71) formant tête devenant un appendice tubulaire (76) formant le contact enfichable cylindrique.

2. Installation de transmission d'énergie à isolement gazeux, selon la revendication 1,
caractérisée par le fait
que le diamètre extérieur de l'appendice tubulaire (76) de l'une (71) des parties en forme de têtes est plus petit que le diamètre extérieur de la région, réalisée en tant qu'électrode de commande (73, 75), de la partie (71) en forme de tête.

3. Installation de transmission d'énergie à isolement gazeux, selon la revendication 1 ou 2,
caractérisée par le fait
que l'isolateur discoïdal d'appui (5) est de réalisation tronconique, le diamètre extérieur de la partie (61) en forme de tête, entourée par l'isolateur d'appui, étant plus petit que le diamètre extérieur du segment conducteur intérieur (21) situé dans la continuité directe.

4. Installation de transmission d'énergie à isolement gazeux, selon l'une des revendications 1 à 3,
caractérisée par le fait
que l'extrémité (24) du segment conducteur intérieur (22) attenant est dotée d'une électrode de commande (25) à coïncidence diamétrale, qui forme simultanément le contact glissant (26) cylindrique creux.

5. Installation de transmission d'énergie à isolement gazeux, selon la revendication 4,
caractérisée par le fait
que le contact glissant est constitué d'une pièce de contact (26) séparée d'avec l'électrode de commande (25), réalisée sous la forme d'une pièce sphérique de contact sur son pourtour extérieur, et montée rotative sur l'électrode de commande (25).
